# EUROPEAN PATENT APPLICATION

(11) **EP 0 685 837 A1**
(43) Date of publication of application: **06.12.1995**
(21) Application number: 94925655.6
(22) Date of filing: 18.08.1994
(51) Int. Cl.: G11B 5/127, G11B 11/00, G11B 13/04

(54) **METHOD OF WRITING DATA ONTO AND READING DATA FROM A MAGNETIC CARRIER AND A HEAD UNIT FOR CARRYING THIS OUT**

(30) Priority: 30.11.1993 RU 93053850
(71) Applicant: Enilenis, Roman Igorevich, Saratov 410056 (RU); Enilenis, Igor Stanislavovich, Saratov 410010 (RU)
(72) Inventor: Enilenis, Roman Igorevich, Saratov 410056 (RU); Enilenis, Igor Stanislavovich, Saratov 410010 (RU)
(74) Representative: W.P. Thompson & Co.
(86) International application number: RU9400194
(87) International publication number: WO9515553

(57) **Abstract**

The invention relates to data storage. The proposed method of writing data onto and reading them from a magnetic carrier (6) involves allowing a directional beam of electromagnetic radiation to act on the section (5) of the magnetic circuit (2) of the head which faces the carrier (6) to create a local reversible disturbance in the magnetic conductivity in the form of a virtual gap. The proposed head for carrying out this method comprises an electromagnetic radiation source (7) and a closed magnetic circuit (2) made of a magnetic substance with pronounced thermomagnetic properties. One section (3) of the magnetic circuit (2) has an electric winding (4) around it, while the other (5) faces the carrier (6) and is connected by means of a waveguide (7) to the electromagnetic radiation source (7).

## Description

### Field of the Invention

The invention relates to the field of information storage in general and more particularly to a method for information recording on and reading from a magnetic carrier and a recording head for effecting the same.

The present invention may be used to advantage for recording information on tape magnetic carriers in video tape recorders, video cameras and digital tape recorders.

In addition, the invention may be used in reversible storage units of computers, storage units on magnetic disks (hard and floppy), in disk drives of other types or in static magnetic recording units.

### Background of the Invention

Known in the prior art are methods and devices for recording and reading coded information written on different carriers, such as tapes, disks (more rarely, magnetic drums, cores, wire) are based both on a pure magnetic principle of inducing - registering local (on a domain level) zones of a magnetized carrier material and on a combination of processes of different nature: magneto-optical, thermomagnetic, holographic, magnetoacoustic, magnetostatic, magneto-strictive, magnetoresistive, etc. Systems of the magnetic recording on a moving carrier occupy a substantial volume in the general classification of storage units. Such systems are widely used due to their economic efficiency and simple realization, as well as due to high indicators of such parameters as digital data flow rates, information density, information efficiency, low cost of record/storage/read operations per item of information (including the cost of equipment and carrier). Technical and economical advantages of the "record current - residual induction" and "residual induction - magnetic head EMF" conversions in combination with high characteristics of the carriers and recorded tapes determine further prospects in the development of the traditional magnetic recording along with the newest methods of information storage.

At present, there is observed a general tendency for perfecting the storage units by way of increasing longitudinal, transverse, surface and volume information density on a carrier, information transfer rate and by reducing dimensions of storage units.

For more complicated methods of a thermomagnetic and a magneto-optical recording the limiting values of the surface density amount to 1-3 Gbit/sq.mm which is dictated by the physical limit - minimum dimensions of nondestructive identified image in the carrier. At present, the values of the parameter presented hereinbefore being 10,000 times lesser than the limiting value have been attained and are widely used in the field of the magnetic recording which is a good prerequisite for further perfection of methods and devices.

The methods and devices for recording and reading coded information are subdivided, depending upon a configuration of an "information-bearing signal trace" in the moving carrier, into three main groups: a multitrack longitudinal recording with the use of multichannel fixed heads (blocks of heads), transverse track recording by means of rotating heads with mutually perpendicular vectors of the tape and head rates, and a helical recording by means of the rotating heads with an acute angle between the vectors of the tape and head rates.

A multitrack longitudinal format is characterized by advantages related to the fixed position of the heads (compactness, minor wear, relative simplicity) and a relatively low rate of the carrier, however this format has a moderate surface recording density.

A transverse format, while eliminating disadvantages of the format described hereinbefore, involves 3 substantial increase of the "head - tape" irate and a nonuniform mechanical loading of peripheral areas of the tape in width when it transversely ecompasses the cylindrical (disk) block of heads having a horizontal axis of rotation.

A helical format features a compact embodiment of a storage unit, a decrease of the tape deformation and high relative rates providing the required data flow rates, a dynamic range, density of recording and capacity of the recorded tapes. This format is used in the video recording (VETA, Video 8, VHS.S-VHS), digital audio recorders (R-DAT, A-DAT) and in digital information storage units of a large capacity for computers. The advantages of the units described hereinbefore reside in thin lines of 50-20 µm with a density of 20-50 lines per mm resulting in a high surface density of information recording (100 kbits/sq.mm) and a high capacity (up to 4 Gbyte per cassette) and a minor requirement of magnetic carrier (0.5-2.0 cm/s). A high-precision track following is insured by electronic automatic tracking systems.

A substantial disadvantage of the two last types of devices resides in a mechanical rotation required for the high-velocity line scanning of the "head/tape" motion (up to 10 m/s) which results in a substantial wear of the heads and tape, and in a low service life.

The "Head - tape" rate limiting is also responsible for relatively low data flow rates in these devices which prevents turning to more perfect standards of information storage. Besides, when turning to narrower and more intensively packed tracks with recorded information the quality of recording and that of reading are adversely affected by jitter of lines (stochastic vibration of the centerline of an information-bearing signal trace) which puts in the forefront the problem of a precision automatic tracking.

Some other disadvantages reside in a complexity of the mechanical components of storage units of the heads proper, a relatively low fabricability, high cost and in unreliability thereof in adverse operating conditions.

Improvement of the characteristics related to the storage units with a moving carrier is first of all associated with the perfection of record/read methods by way of concurrent or sequential combination of processes different in nature along with the design optimization of the storage units which has been presented in a plurality of inventions (SU, A, No. 504236, SU, A, No. 403414, YP, B, No. 52-42372).

However, the inventions listed hereinbefore suffer from the general disadvantages related to the methods and devices for storage of information on the movable carriers.

### Disclosure of the Invention

The present invention is essentially aimed at providing a method for information recording on and reading from a magnetic carrier and a recording head for effecting the same which would make it possible to increase the surface density of recording along with the improvement of the line definition and increase in the data flow rate.

This aim is attained by providing a method for recording/reading information on a magnetic carrier residing in that an area of the head magnetic circuit facing the carrier is acted upon by a directional magnetic radiation to form a local reversible disturbance of a magnetic circuit permeance in the form of a virtual gap.

The proposed method is based on a physical process of the local reversible disturbance of the magnetic circuit permeance achieved due to the local heating above Curie point (thermomagnetic effect) resulting in a mechanical gap named a virtual gap.

In a preferred embodiment of the invention the area of the magnetic circuit facing the carrier is scanned by the electromagnetic radiation substantially in parallel to the carrier.

The proposed embodiment of the invention makes it possible to substantially increase the resolution of the position of the information-bearing signal trace on the carrier (recording track and its edges). This results in decrease of a relative play of the "carrier - head" path due to a stationary position of the head and decrease in the value of the thermodetonation in the record/read process.

The aim is also attained by providing a head for effecting the method of recording information on and reading from the carrier, comprising a source of electromagnetic radiation with waveguide and a closed loop magnetic cricuit made of a magnetic with a clearly defined thermomagnetic effect, one part of the magnetic circuit being encompassed by an electric winding, while the other part faces the carrier and is connected with the waveguide.

In comparison with the heads having a mechanical gap the proposed head features a smaller spatial area for a "flyout" of the magnetic lines of force from the head into the carrier which provides higher density parameters of information recording.

In one of the preferred embodiments of the invention a modulated laser diode is used as a source of electromagnetic radiation, the waveguide being made planar with a width not less than the length of an area of the magnetic circuit facing the carrier and comprises a focusing and a scanning elements, and the waveguide is made in the form of a closed frame, one of the edges thereof being parallel to the surface of the carrier.

A proposed embodiment of the invention allows compactness of the device to be obtained at the expense of an integrated manufacture of the magnetic and scanning components of the head without any mutual influence (noise), and there is no need for mechanical scanning of the recording tracks.

The value of an induced gap in a transverse (relative to the line of the information-bearing signal trace) direction is much smaller than that of known heads with a mechanical gap, as the magnetic circuit of the proposed head has been made of a thin film having a submicron thickness. This in turn determines the narrowness of the information-bearing signal trace in the carrier (submicron width of the recording track) and a more close location of tracks-lines on the carrier.

It is preferred that a universal head be provided with an automatic tracking controller the outputs of which should be connected to the laser diode, scanning element and the electric winding.

Such an embodiment of the invention makes it possible to simplify the construction of the external portion of the whole device for recording, storing and reading information, as the functions of the automatic tracking have been imparted to the universal head.

It is desirable that an acoustic deflector be used as a scanning element.

Such a construction makes it possible to achieve better dynamic indicators of the record/read process than in the case of mechanically movable devices which provides achievement of high data flow rates.

Thus, a method for information recording on and reading from a magnetic carrier and a recording head for effecting the sire makes it possible to form an arbitrarily positioned virtual gap in the thin-film magnetic circuit at a substantially high rate of scanning of the narrow-directed "flyout" area of the magnetic lines of force into the carrier. Decrease in dimensions of the information-bearing signal trace (due to smallness of the virtual gap) along with decrease in the jiter-detonation (due to stationary position of the head) provide the approach of the density parameters of information magnetic recording to their theoretical limits determined by the physical limitations on the processes in the carrier and in the recording head. This combines with elimination of a plurality of disadvantages inherent to the known methods and devices for effecting the same.

### Brief Description of the Drawings

These and other objects of the present invention will become more apparent from the following detailed description of its particular embodiments illustrated by the accompanying drawings, wherein:
Fig.1 is a schematic diagram illustrating the layout of the head for effecting the method, according to the invention (axonometric projection);
Fig.2 is a schematic diagram illustrating functioning of the head (side view);
Fig.3 ditto as in Fig.2 (plan view);
Fig.4 is view A of Fig.3.

### Best Mode for Carrying Out the Invention

The method for information recording on and reading from a magnetic carrier resides in that an area of the head magnetic circuit facing the carrier is acted upon by a directional radiation to form a reversible disturbance of the permeance of this area in the form of a virtual gap.

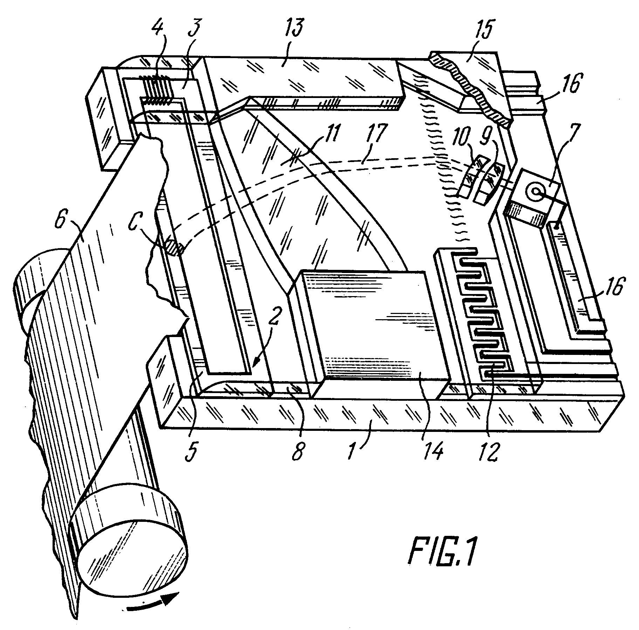

The head comprises a flat substrate 1 (Fig.1) made of a dielectric material on the periphery of which is accommodated a magnetic circuit 2 having the form of a frame made from a thin-film material (0.1-1.0 µm thick), one section 3 of the frame being encompassed by an electric planar winding 4. The magnetic circuit 2 is made of a magnetic with a clearly defined thermomagnetic effect. One of sections 5 of the magnetic circuit 2 (one of the frame edges) faces a magnetic carrier 6 (magnetic tape) and is disposed in parallel with the surface thereof. A source of electromagnetic radiation, a modulated laser diode 7, is installed on the section of the substrate 1 opposite to the magnetic circuit 2.

Disposed over the magnetic circuit 2 and a larger portion of the substrate 1 is a planar waveguide 8 (light guide) used for communicating the section 5 of the magnetic circuit 2 with the diode 7.

The waveguide 8 has the width equal at least to the length of the section 5 of the magnetic circuit 2 and is provided with focusing plano-cylinder lenses 9, 10, 11. The head is also provided with a scanning element 12 in the form of acousto-optic deflector based on an opposite-post resonator-exciter of surface acoustic waves. The scanning element 12 is installed on the substrate 1 so that the axis of electromagnetic radiation at the exit from the lens 9 is disposed at a Bragg angle to the front of surface acoustic zones. An absorber 13 of surface acoustic waves is installed on the substrate 1 opposite to the scanning element 12. Also installed on the substrate 1 is an automatic tracking controller 14 the outputs of which are electrically associated with the winding 4, the diode 7 and the deflector 12. At the top the head is covered with a housing 15 of a glassy material providing the sealing and mechanical protection of the units installed on the head. A contact pad 16 for input of the power supply and output of the head signals is provided at the edge of the substrate 1.

The head functions in the following manner.

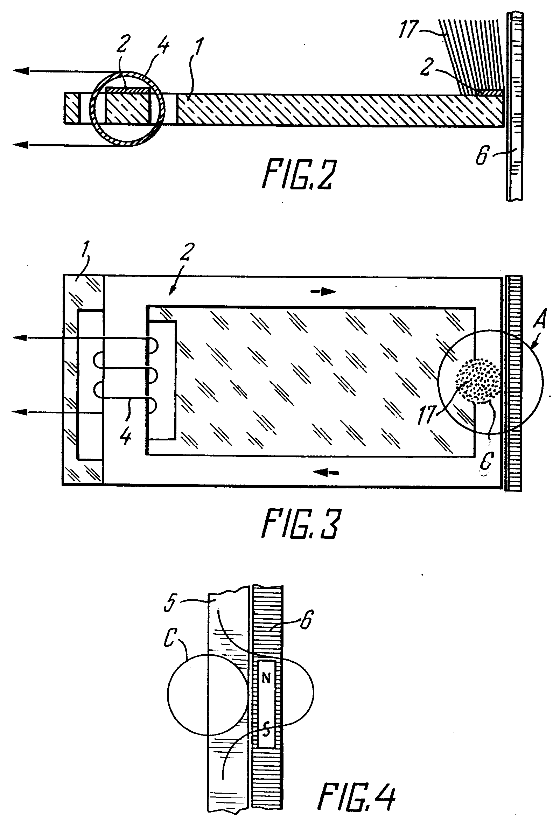

Recording mode. Upon delivery of the electric power to the laser diode 7 a coherent radiation 17 emitted therefrom passes through the planar waveguide 8 made from a transparent material, for example, lithium niobate, which possesses clearly defined piezoelectric properties. Formed in this material by the method of hydrogen exchange (diffusion of Ti or by other methods) are optical elements 9, 10, 11 and a "bending" edge of the light guide 8 contributing to getting a laser radiation spot 13 with a sufficient degree of focusing onto the section 5 of the magnetic circuit 2. As a magnetic featuring a relatively low Curie point, a high induction of saturation, low remagnetization losses in weak fields, low Barkhausen effect along with a high permeance with its sharp drop near Curie point, then the local overheating (T > TCurie) induces a virtual gap C. The virtual gap C is essentially a small-size area with disturbed permeance of a homogeneous material of the permanently closed magnetic circuit 2 (Figs 2-4).

As the application of an electric recording signal to the winding 4 induces a magnetic field whose closed magnetic lines of force are concentrated in the magnetic circuit 2, the forced local disturbance of the magnetic circuit permeance contributes to the "flyout" of the magnetic lines of force into the nearby magnetic carrier 6 (Fig.4).

Formation of magnetic domains in the information-bearing signal trace of the moving carrier 6, with the virtual gap C remaining stationary results in a longitudinal single-track recording.

Changing the recording format into a helical and transverse formats is attainable by way of scanning the virtual gap C along the section 5 of the magnetic circuit 2 the edge of which is parallel to the plane of the carrier (magnetic layer). The latter is disposed at a small distance and more frequently is in a direct mechanical contact with the edge of the magnetic circuit 2 and with side end face of the head substrate 1.

Scanning of the beam (Fig.3) emitted from the laser diode 7 is effected by the optoelectronic method (use may be made of electro-optical deflectors or deflectors based on other principles). Modulation of the electromagnetic radiation, the laser diode 7, and functioning of the deflector 12 is synchronized by an integrated circuit of the automatic tracking controller 13. In the deflector 12 the frequency and geometric parameters of the opposite-post resonator are selected on the basis of acousto-optical characteristics of the deflector 12 calculated in compliance with the standard procedure. The resonator parameters define a sonic wave period and length which should be comparable with the length of a radiation wave, that is about 0.8-1.6 µm which corresponds to an excitation frequency of 500-1000 MHz. The resonator band is selected with due regard to a required deviation for a required angle of defection of the laser diffracted beam.

Reading mode. The processes going on in the optoelectronic portion of the head are analogous to the processes taking place during recording (with the difference related to the clock signals at the input of the automatic tracking controller 14 - the signals are coming from the carrier 6). The electric winding 4 of the head in this mode is connected into the input of an external amplifier of the playback signals and induces the EMF from the field of the information-bearing signal trace on the carrier 6.

The general condition for effecting the record/read modes resides in limiting the size of a spot of the laser radiation 17 on the section 5 of the magnetic circuit 2 by the width thereof. The optical elements 9, 10, 11 used as the focusing-collimating means provide the diameter of the spot of the laser radiation 17 or the width of an ellipse from 1 to 10 µm (depending upon the indicated width of the magnetic circuit 2). Capabilities of the diffusion technology of the optical elements 9, 10, 11 (the hydrogen exchange through a mask - for lithium niobate) provides a stepwise variation of a relative refractive index for an extraordinary wave dNe = 0.12 and for an ordinary wave dNo = -0.004. For introducing the radiation 17 of the laser diode 7 in a waveguide layer use may be made of one widely known methods, for example, end face, diffraction, etc.

Evaluation of the technical characteristics of the proposed method for information recording on and reading from a magnetic carrier and a recording head for effecting the same when its working process is subjected to the physicomathematical simulation proves that the method is efficient and fit for service in comparison with the known standards. The attainable high density of submicron lines from 1000 to 10,000 line/mm defined by a small thickness of the film magnetic circuit 2 amounting to 0.1-1.0 µm makes it possible to obtain a surface density of up to 10 Mbit per sq.mm for 1 µm zone of the virtual gap, thereby providing the volume of information on a standard recorded tape in a VHS cassette in an amount over 10 Tbit (10,000,000,000,000 bit). The speed of scanning of the virtual gap may reach 1000 m/s (with account of the heat circulation and actually in the absence of wear of the tape and head), thereby defining a very high rate of the information flow (up to 500 Mbit/s) not attainable for other methods of scanning. Inasmuch as the rapid local heating and the necessary scanning of the hot spot is effected by means of the laser diode 7 with the use of the acousto-optical deflector and the linear optic elements have been made following the diffusion planar technology in the integrated piezoelectric planar light guide, then it will be understood that there is a combination of new functional capabilities of the device with a high fabricability thereof. The head is provided with one-chip microcircuit of the automatic tracking controller which controls the resonator of the deflector insuring the scanning of the gap by the lines of a carrier moving forward and in reverse, and when the carrier is stopped.

Given hereinafter is a comparative table of the basic indicators specified in the modern international standards for recording and reading information and the indicators of the proposed method.

| System: density of information | S-DAT | R-DAT | VYS | FDD | YDD | E-DAD | Proposed method |
|---|---|---|---|---|---|---|---|
| Longitudinal, kbit/mm | 2.5 | 2.4 | 2.2 | 0.13 | 1.8 | 1.2 | 3 |
| Surface, kbit/sq.mm | 32 | 1280 | 49 | 1.5 | 16 | 720 | 10,000 |
| Volume, Mbit/sq.mm | 2 | 9 | 1.1 | 0.006 | 0.003 | 0.6 | 200 |
| Data flow rate, Mbit/s | 1.2 | 1.5 | 4 | 0.5 | 24 | 1.4 | 500 |

### Industrial Applicability

The present invention may be used in the computer technology, professional and household apparatuses of the audio and video recording, in systems of two-way cable television with the regeneration of the video information (interative television).

The proposed invention makes it possible to obtain a perspective technical means for digital registration of video information for mass systems and systems of digital recording for a high-definition television. Designed for operation on standard magnetic carriers and imparted with high design, operational and cost characteristics, the proposed system is also intended for use in external mass storage units with a random access in the block addressing mode and with an assigned format in the archival storage. The use of the main principle of the method is promising for realizing information disk storage units with an increased density of the lines, a required quality of the line tracking and with an ultrafast random access, as well as for other devices which by the mentioned parameters may surpass the optical and magneto-optical disk-type devices for recording, storing and reading information. This is attained by using the main principle of the head which eliminates a definite spatial diffraction limitations inherent to direct optical systems.

## Claims

1. A method for information recording on and reading from a magnetic carrier resides in that an area (5) of a magnetic circuit (2) of a head facing a carrier (6) is acted upon by a directional magnetic radiation (17) to form a local reversible disturbance of the permeance of this section (5) of the magnetic circuit (2) in the form of a virtual gap C.

2. A method as claimed in claim 1, **characterized** in that the electromagnetic radiation (17) scans the section (5) of the magnetic circuit (2) facing the carrier (6) substantially in parallel to the surface thereof.

3. A head for information recording on and reading from the magnetic carrier, comprising a source of the electromagnetic radiation (17) with a waveguide (8) and the closed magnetic circuit (2) made from a magnetic with a clearly defined thermomagnetic effect, one section (3) of the magnetic circuit (2) being encompassed by an electric winding (4), and the other section (5) faces the-carrier (6) and is communicated with the waveguide (8).

4. A head as claimed in claim 3, **characterized** in that a modulated laser diode (7) is used as a source of the electromagnetic radiation (17), the waveguide (8) is made planar with a width not smaller than the length of the section (5) of the magnetic circuit (2) facing the carrier (6) and comprises a focusing (9, 10, 11) and a scanning (12) elements, and the magnetic circuit (2) is made in the form of a closed thin-film frame, one of the edges thereof faces the carrier (6) substantially in parallel with the surface thereof.

5. A head as claimed in claim 4, **characterized** in that it is provided with an automatic tracking controller (13) the outputs of which are connected to the laser diode (7), the scanning element (12) and to the electric winding (4).

6. A head as claimed in claims 4, 5, **characterized** in that an acousto-optical deflector is used as the scanning element (12).
